# EUROPÄISCHE PATENTSCHRIFT

(11) **EP 0 575 308 B1**
(45) Veröffentlichungstag und Bekanntmachung des Hinweises auf die Patenterteilung: **29.11.1995**
(21) Anmeldenummer: 93890120.4
(22) Anmeldetag: 16.06.1993
(51) Int. Cl.: B61L 5/10, B61L 1/06

(54) **Einrichtung zur Erfassung von Abweichungen des Radlaufes für Schienenweichen oder -kreuzungen**
Running wheel deviation detection for railway points or crossings
Dispositif de détection des déviations du passage de roues, pour aiguillages ou croisements ferroviaires

(30) Priorität: 17.06.1992 AT 1238/92
(43) Veröffentlichungstag der Anmeldung: 22.12.1993
(73) Patentinhaber: VAE Aktiengesellschaft, 1010 Wien (AT)
(72) Erfinder: Durchschlag, Gerald, A-8740 Zeltweg (AT)
(74) Vertreter: Haffner, Thomas M., Dr.

(56) Entgegenhaltungen:
- EP-A- 0 344 145
- US-A- 4 530 245

## Beschreibung

Die Erfindung bezieht sich auf eine Einrichtung zur Erfassung von Abweichungen des Radlaufes in seitlicher Richtung und/oder in Höhenrichtung für Schienenweichen oder -kreuzungen, bei welcher ein Betätigungsglied der Einrichtung mit wenigstens einem Sensor mit einem Dehnungsmeßstreifen zusammenwirkt.

Einrichtungen der eingangs genannten Art sind beispielsweise der EP-A-344 145 zu entnehmen.

Überwachungseinrichtungen für die räumliche Lage von schwenkbaren Schienen, wie sie beispielsweise der AT-PS 358 625 zu entnehmen sind, beschränken sich darauf, die Endlagen schwenkbarer Schienen zu melden, um auf diese Weise nach Meldung einer korrekten Endlage die Freigabe des Gleises zu ermöglichen. Einrichtungen dieser Art werden in Fernstelleinrichtungen bzw. Stellwerken eingesetzt.

Die eingangs genannte und in der EP-A-344 145 beschriebene Einrichtung geht nun über derartige Endstellungsmelder hinaus und zielt darauf ab, Daten für den Zustand der Weiche, insbesondere den Verschleiß einer Weiche zu erfassen. Die aus dieser Literaturstelle zu diesem Zweck bekannte Einrichtung zur Erfassung von Abweichungen des Radlaufes in seitlicher Richtung und/oder in Höhenrichtung ist im Bereich der theoretischen Herzstückspitze angeordnet, wobei bei der bekannten Einrichtung der Sensor als Schalter ausgebildet war und das Betätigungsglied um eine zur Schienenoberflächenehene im wesentlichen normale oder eine zur Schienenoberfläche im wesentlichen parallele und in Richtung der Winkelhalbierenden des Herzstückes verlaufende, kreuzende Achse schwenkbar gelagert ist. Ein bei Abweichungen vom korrekten Radlauf erfolgendes Betätigen eines derartigen Schalters durch Verschwenken des Betätigungsgliedes um seine jeweilige Schwenkachse führt zu Signalen, welche in der Folge ausgewertet werden können und welche Rückschlüsse auf den Verschleiß von sicherheitserheblichen Teilen einer Weiche ermöglichen. Bei der bekannten Einrichtung war das Betätigungsglied des Schalters konisch ausgebildet und hat sich von der Oberkante nach unten und vom Vorderende zur Herzstückspitze konisch erweitert. Solange kein übermäßiger Verschleiß auftritt, wird ein derartiges Betätigungsglied weder vom Spurkranz der Räder noch von den Laufflächen der Räder berührt und es wird daher solange kein Signal abgegeben, solange eine Kollision des Spurkranzes bzw. der Lauffläche mit dem Betätigungsglied nicht eintritt. Um Abweichungen in Höhen-richtungen zu erfassen, wurde bei der vorbeschriebenen Einrichtung zusätzlich eine Verschiebbarkeit des Betätigungsgliedes in vertikaler Richtung zugelassen und ein weiterer Drucksensor zur Erfassung von Vertikalkräften angeordnet. Eine weitere Ausbildung der vorbekannten Einrichtung umfaßte zwei miteinander unter Einschluß eines spitzen Winkels verbundene Federblätter, an deren Seitenflächen Dehnungsmeßstreifen festgelegt waren und an deren freien Ende ein Prüfkopf festgelegt war.

Alle diesen bekannten Einrichtungen waren relativ aufwendig im Zusammenbau und die Auswertung bzw. Kalibrierung der von derartigen bekannten Einrichtungen abgegebenen Signale gestaltete sich relativ aufwendig. Die unmittelbare Vergleichbarkeit zweier gleichartiger Einrichtungen war in der Regel nicht ohne weiteres gegeben und es mußte daher ein aufwendiger Abgleich für jede derartige Einrichtung einzeln vorgenommen werden. Darüber hinaus gestaltete sich die Differenzierung zwischen Horizontal- und Vertikalkräften, welche zu Signalen führen, bei der Auswertung relativ schwierig.

Die Erfindung zielt nun darauf ab, eine Einrichtung der eingangs genannten Art zu schaffen, mit welcher die Zuordnung der Signale von Sensoren zur Richtung der jeweils diese Signale verursachenden Belastung vereinfacht wird und welche einen rationellen und einfachen Zusammenbau ermöglicht und gleichzeitig reproduzierbare Ergebnisse sicherstellt, welche für eine Mehrzahl derartiger Einrichtungen unmittelbar vergleichbare Ergebnisse liefert, ohne daß hiefür aufwendige Kalibrierungsmaßnahmen erforderlich werden. Zur Lösung dieser Aufgabe wird erfindungsgemäß eine Einrichtung der eingangs genannten Art dadurch gekennzeichnet, daß das Betätigungsglied mit wenigstens einer Torsionsstange verbunden ist, daß die Torsionsstange an ihrem Mantel oder in einer Bohrung in Umfangsrichtung versetzt vier Dehnungsmeßstreifen aufweist, daß die Torsionsstange im Betrieb in Schienenlängsrichtung oder normal zu dieser angeordnet ist, daß das Betätigungsglied als federnder Hohlkörper ausgebildet ist und eine Basisplatte aufweist, welche mit der Torsionsstange verbunden ist, und daß sich das Betätigungsglied ausgehend von der Basisplatte zu einem Prüfkopf hin verjüngt. Durch eine derartige Ausbildung der Sensoranordnung unter Verwendung einer Torsionsstange, wie sie beispielsweise in der US-A 4 530 245 bereits vorgeschlagen wurde, wird eine besonders einfache und betriebssichere Ausbildung erreicht, wobei die Anordnung von Dehnungsmeßstreifen am Umfang bzw. Mantel bzw. in einer Bohrung einer derartigen Torsionsstange die Möglichkeit bietet, nicht nur Drehkräfte um die Achse der Torsionsstange, welche eine Torsion der Stange bewirken würden, zu erfassen, sondern auch Biegekräfte, welche eine Verbiegung der Achse der Torsionsstange zur Folge haben könnten, sicher zu erfassen. Es wird somit mit einem einzigen einfachen und kompakten Element, nämlich der Torsionsstange, die gleichzeitige Erfassung einer mehrachsigen Belastung ermöglicht, bei welcher eine Auswertung der einzelnen axialen Komponenten dieser mehrachsigen Belastung in einfacher Weise gelingt. Mittels eines derartigen kompakten und kleinbauenden Teiles, wie der erfindungsgemäß zum Einsatz gelangenden Torsionsstange, wird hiebei nicht nur der Zusammenbau wesentlich vereinfacht, sondern es werden auch für unterschiedliche Einrichtungen vergleichbare Resultate ohne aufwendige Kalibrierungsarbeiten sichergestellt. Durch die erfindungsgemäß vorgeschlagene Ausbildung des Betätigungsgliedes als federnder Hohlkörper wird weiters die Schlagwirkung auf einen Prüfkopf ausreichend abgefangen, so daß keine plastischen Verformungen des Betägigungsgliedes entstehen können.

Die Torsionsstange, welche durch Anordnung der Dehnungsmeßstreifen das eigentliche Sensorelement darstellt, kann hiebei in Schienenlängsrichtung verlaufend angeordnet werden, wodurch seitliche Abweichungen des Radlaufes bei einer Betätigung des Betätigungsgliedes als Torsionskräfte zur Wirkung gelangen und ausgewertet werden können. Vertikalkräfte werden von einer derartigen Torsionsstange als Biegekräfte aufgenommen und können gesondert ausgewertet werden. Zusätzlich oder alternativ zu einer derartigen Anordnung der Torsionsstange in im wesentlichen horizontaler Richtung und in Schienenlängsrichtung kann aber auch eine vertikale Anordnung quer zur Schienenlängsrichtung vorgesehen sein, wobei mit einer derartigen Ausbildung in erster Linie Biegekräfte gemessen werden. Eine derartigen Ausbildung erlaubt, gegebenenfalls zusätzlich Signale für die gesonderte Auswertung der einzelnen Richtungen der aufgetretenen Belastung zu erzielen.

Mit Vorteil ist die erfindungsgemäße Einrichtung so ausgebildet, daß die Dehnungsmeßstreifen in einem Winkelabstand von 90° angeordnet sind und im Betrieb um 45° gegenüber einer in Schienenlängsrichtung verlaufenden Vertikalebene versetzt angeordnet sind, wobei eine derartige Ausbildung besonders hohe Signale bei kleiner Belastung bei der Erfassung von Abweichungen des Radlaufes in einer Schienenweiche oder -kreuzung ergibt.

Ein besonders einfacher Zusammenbau und eine kompakte Ausbildung mit hoher Betriebssicherheit läßt sich vorzugsweise dadurch erzielen, daß das Betätigungsglied als mit der Torsionsstange verbundener Hebelarm ausgebildet ist, dessen freies Ende den Prüfkopf trägt.

Für eine definitive Krafteinbringung vom Betätigungsglied in den Sensor bzw. die Torsionsstange und somit für eine verbesserte Auswertung durch Erzielung höherer und den einzelnen Belastungszuständen einfacher zuordenbarer Signale ist die Ausbildung bevorzugt so getroffen, daß die Dehnungsmeßstreifen an Stellen des Umfanges des Torsionsstange angeordnet sind, welche kraftschlüssig mit Rippen oder Stegen des Betätigungsgliedes zusammenwirken.

Eine weitere Erhöhung der Betriebssicherheit läßt sich dadurch verwirklichen, daß die Einrichtung über ein eine Schutznase tragendes Widerlager an der Schwelle, der Rippenplatte bzw. der Herzstückspitze festgelegt ist.

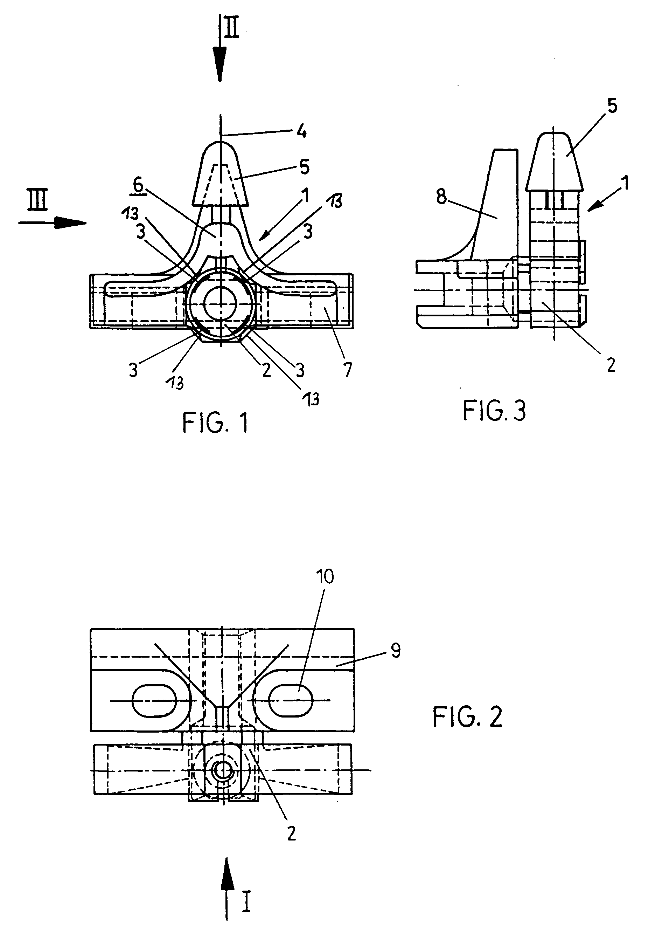

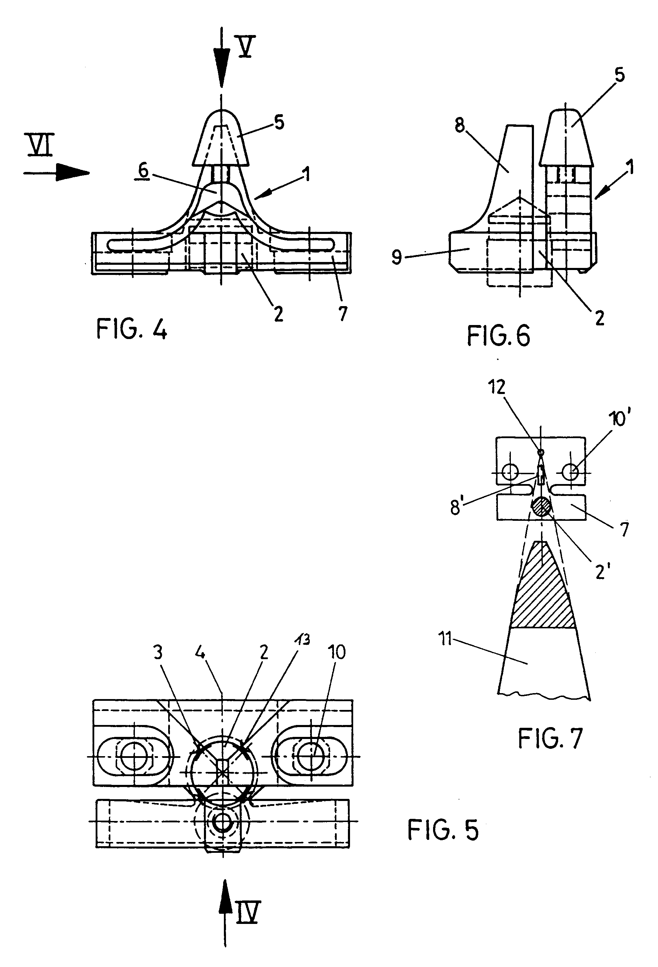

Die Erfindung wird nachfolgend anhand von in der Zeichnung schematisch dargestellten Ausführungsbeispielen näher erläutert. In dieser zeigen: Fig.1 eine Seitenansicht einer ersten Ausführungsform einer erfindungsgemäßen Einrichtung; Fig.2 eine Draufsicht in Richtung des Pfeiles II auf die Ausbildung gemäß Fig.1, wobei Fig.1 eine Ansicht gemäß Pfeil I der Fig.2 darstellt; Fig.3 eine Ansicht in Richtung des Pfeiles III der Fig.1; Fig.4 eine Seitenansicht einer abgewandten Ausführungsform der erfindungsgemäßen Einrichtung; Fig.5 eine Draufsicht entsprechend dem Pfeil V auf die Ausbildung gemäß Fig.4, wobei Fig.4 eine Ansicht gemäß Pfeil IV der Fig.5 darstellt; Fig.6 eine Ansicht gemäß Pfeil VI der Fig.4; und Fig.7 schematisch die Position der Festlegung einer erfindungsgemäßen Einrichtung im Bereich einer Schienenweiche bzw. -kreuzung.

Bei der Ausführungsform gemäß den Fig.1 bis 3 ist mit 1 ein Betätigungsglied einer Einrichtung zur Erfassung von Abweichungen eines Radlaufes in seitlicher Richtung und/oder in Höhenrichtung für Schienenweichen oder -kreuzungen bezeichnet, wobei das Betätigungsglied 1 mit einer Torsionsstange 2 drehfest verbunden ist. Die Torsionsstange 2 ist bei dem dargestellten Ausführungsbeispiel in Schienenlängsrichtung verlaufend angeordnet und trägt an ihrem Umfang vier Dehnungsmeßstreifen 3. Die Dehnungsmeßstreifen 3 sind dabei in einem relativen Winkelabstand voneinander von 90° angeordnet und um jeweils 45° zur durch die Schienenlängsrichtung verlaufenden Vertikalebene angeordnet, wobei die Vertikalebene strichpunktiert mit 4 angedeutet ist.

Das Betätigungsglied 1 ist auf die Torsionsstange 2 aufgepreßt ausgebildet, wobei das Betätigungsglied 1 an seinem von der Torsionsstange 2 abgewandtem Ende einen Prüfkopf 5 trägt. Das Betätigungsglied 1 ist als federnder Hohlkörper ausgebildet, wobei schematisch ein Hohlraum 6 angedeutet ist. Die Torsionsstange 2 ist mit den Dehnungsmeßstreifen 3, welche bei der gezeigten Ausführungsform am Innenumfang des Außenmantels der zusammen mit den Dehungsmeßstreifen 3 den Sensor bildenden Torsionsstange angeordnet sind, in einer Basisplatte 7 des Betätigungsgliedes angeordnet. Wie insbesondere aus Fig.3 ersichtlich, ist weiters unmittelbar dem Betätigungsglied 1 benachbart eine Schutznase 8 vorgesehen, welche mit einem Widerlager 9 verbunden ist, wobei über das Widerlager 9 die Festlegung an einer Herzstückspitze, einem Schienenteil bzw. einem Schwellenteil erfolgt, wobei Durchbrechungen 10 für die Festlegung der gesamten Einheit angedeutet sind.

Die Torsionsstange 2 ist hiebei über Stege bzw. Rippen 13 mit der Basis 7 des Betätigungsgliedes 1 kraftschlüssig verbunden, wobei die Rippen bzw. Stege unmittelbar mit den Bereichen der Torsionsstange 2 zusammenwirken, in welchen die Dehnungsmeßstreifen 3 angeordnet sind.

Bei der abgewandelten Ausführungsform gemäß den Fig.4 bis 6 sind für gleiche Bauteile die Bezugszeichen der Fig.1 bis 3 bei-behalten worden. Es ist wiederum ein Betätigungsglied 1 mit einem Prüfkopf 5 vorgesehen, wobei bei dieser Ausführungsform die Torsionsstange 2 normal auf die Schienenlängsrichtung angeordnet ist. Die Torsionssstange 2 weist wiederum vier Dehnungsmeßstreifen 3 auf, welche relativ zueinander um einen Winkel von 90° versetzt angeordnet sind und einen Winkel von 45° mit der wiederum schematisch mit 4 angedeuteten, die Schienenlängsrichtung enthaltenden Vertikalebene einschließen.

Das Betätigungsglied ist wiederum als federnder Hohlkörper ausgebildet, wobei die Torsionsstange 2 wiederum in der Basisplatte 7 bzw. dem damit verbundenen Widerlager 9, welches die Schutznase 8 trägt, angeordnet ist und über Stege bzw. Rippen 13 kraftschlüssig mit dem Betätigungsglied 1 bzw. der Basis 7 verbunden ist.

In Fig.7 ist schematisch die Position einer Einrichtung zur Erfassung von Abweichungen eines Radlaufes in seitlicher Richtung und/oder in Höhenrichtung an einer Schienenweiche bzw. -kreuzung dargestellt. Dabei ist eine Herzstückspitze 11 angedeutet und es ist zwischen der tatsächlichen Herzstückspitze 11 und der mit 12 bezeichneten theoretischen Herzstückspitze die Einrichtung über die Durchbrechungen 10' festgelegt. Dabei ist deutlich die Anordnung der Torsionsstange 2' ersichtlich und es ist weiters die Schutznase 8' angedeutet.

Insgesamt ist die über die Durchbrechungen 10 festlegbare Einrichtung jeweils einfach an die jeweiligen örtlichen Gegebenheiten anpaßbar. Durch Verwendung eines geschlossenen System einer Torsionsstange 2 mit den Meßstreifen 3, welche zusammen die Sensoreinheit bilden, sind Dichtheitsprobleme weitgehend ausgeschaltet. Durch den Einbau bzw. die Festlegung der Einrichtung in einer vorgegebenen Lage relativ zur tatsächlichen Herzstückspitze bzw. zu den entsprechenden Schienen- oder Weichenteilen können sowohl Abweichungen in seitlicher Richtung als auch in Höhenrichtung meßtechnisch erfaßt werden, da die Krafteinleitung in die gesamte Einrichtung über das Betätigungsglied 1 unmittelbar in den Bereich der integrierten Dehnmeßstreifen 3 an der Torsionsstange 2 erfolgt.

Die Ausführungsform gemäß den Fig.1 bis 3 ist dabei in besonders einfacher Weise für Profilblockherze verwendbar, während die Ausführung gemäß den Fig.4 bis 6 insbesondere für Gußherze einsetzbar ist.

## Patentansprüche

1. Einrichtung zur Erfassung von Abweichungen des Radlaufes in seitlicher Richtung und/oder in Höhenrichtung für Schienenweichen oder -kreuzungen, bei welcher ein Betätigungsglied (1) der Einrichtung mit wenigstens einem Sensor mit einem Dehnungsmeßstreifen (3) zusammenwirkt, dadurch gekennzeichnet, daß das Betätigungsglied (1) mit wenigstens einer Torsionsstange (2) verbunden ist, daß die Torsionsstange (2) an ihrem Mantel oder in einer Bohrung in Umfangsrichtung versetzt vier Dehnungsmeßstreifen (3) aufweist, daß die Torsionsstange (2) im Betrieb in Schienenlängsrichtung oder normal zu dieser angeordnet ist, daß das Betätigungsglied (1) als federnder Hohlkörper ausgebildet ist und eine Basisplatte (7) aufweist, welche mit der Torsionsstange (2) verbunden ist, und daß sich das Betätigungsglied (1) ausgehend von der Basisplatte (7) zu einem Prüfkopf (5) hin verjüngt.

2. Einrichtung nach Anspruch 1, dadurch gekennzeichnet, daß die Dehnungsmeßstreifen (3) in einem Winkelabstand von 90° angeordnet sind und im Betrieb um 45° gegenüber einer in Schienenlängsrichtung verlaufenden Vertikalebene versetzt angeordnet sind.

3. Einrichtung nach Anspruch 1 oder 2, dadurch gekenn-zeichnet, daß das Betätigungsglied (1) als mit der Torsionsstange (2) verbundener Hebelarm ausgebildet ist, dessen freies Ende den Prüfkopf (5) trägt.

4. Einrichtung nach einem der Ansprüche 1 bis 3, dadurch gekennzeichnet, daß die Dehnungsmeßstreifen (3) an Stellen des Umfanges der Torsionsstange (2) angeordnet sind, welche kraftschlüssig mit Rippen (13) oder Stegen des Betätigungsgliedes (1) zusammenwirken.

5. Einrichtung nach einem der Ansprüche 1 bis 4, dadurch gekennzeichnet, daß die Einrichtung über ein eine Schutznase (8) tragendes Widerlager (9) an einer Schwelle, einer Rippenplatte bzw. einer Herzstückspitze (11) festgelegt ist.

## Claims

1. An arrangement for detecting wheel run deviations in the lateral direction and/or height direction for rail switches or crossings, wherein an actuation member (1) of the arrangement cooperates with at least one sensor including a wire strain gauge (3), characterized in that the actuation member (1) is connected with at least one torsion rod (2), that the torsion rod (2) comprises four wire strain gauges (3) on its shell or in a bore offset in the circumferential direction, that the torsion rod (2) in operation is arranged in the longitudinal direction of the rail or normal to the same, that the actuation member (1) is designed as a resilient hollow body and includes a base plate (7) connected with the torsion rod (2), and that the actuation member (1), departing from the base plate (7), tapers towards a testing head (5).

2. An arrangement according to claim 1, characterized in that the wire strain gauges (3) are arranged at an angular distance of 90° and in operation are arranged to be offset by 45° relative to a vertical plane extending in the longitudinal direction of the rail.

3. An arrangement according to claim 1 or 2, characterized in that the actuation member (1) is designed as a lever arm connected with the torsion rod (2) and whose free end carries the testing head (5).

4. An arrangement according to any one of claims 1 to 3, characterized in that the wire strain gauges (3) are arranged on points of the circumference of the torsion rod (2) which cooperate with ribs (13) or webs of the actuation member in a positive and force-transmitting manner.

5. An arrangement according to any one of claims 1 to 4, characterized in that the arrangement is fixed on a sleeper, a ribbed plate or a nose of crossing (11) via an abutment (9) carrying a protection nose (8).

## Revendications

1. Dispositif de détection des déviations du passage de roues dans la direction latérale et/ou en hauteur pour des aiguillages ou croisements ferroviaires, dans lequel un élément d'actionnement (1) du dispositif coopère avec au moins un capteur avec une jauge d'allongement (3), caractérisé en ce que l'élément d'actionnement (1) est relié à au moins une barre de torsion (2), en ce que la barre de torsion (2) présente sur son enveloppe, ou dans un perçage décalé dans la direction de la circonférence, quatre jauges d'allongement (3), en ce que la barre de torsion (2) est placée en service dans la direction longitudinale des rails ou dans la direction normale à celle-ci, en ce que l'élément d'actionnement (1) est conformé en corps creux élastique et présente une plaque de base (7) qui est reliée à la barre de torsion (2), et en ce que l'élément d'actionnement (1) s'effile en partant de la plaque de base (7) en direction d'une tête de mesure (5).

2. Dispositif selon la revendication 1, caractérisé en ce que les jauges d'allongement (3) sont disposées selon une distance angulaire de 90° et, en service, sont placées décalées de 45° par rapport à un plan vertical orienté dans la direction longitudinale des rails.

3. Dispositif selon la revendication 1 ou 2, caractérisé en ce que l'élément d'actionnement (1) est conformé en bras de levier relié à la barre de torsion (2) et dont l'extrémité libre porte la tête de mesure (5).

4. Dispositif selon l'une des revendications 1 à 3, caractérisé en ce que les jauges d'allongement (3) sont placées en des emplacements de la circonférence de la barre de torsion (2) qui coopèrent par influence de force avec des membrures (13) ou barres de l'élément d'actionnement (1).

5. Dispositif selon l'une des revendications 1 à 4, caractérisé en ce que le dispositif est fixé sur une traverse, une semelle ou une pointe de coeur de croisement (11) par l'intermédiaire d'un contrefort (9) portant un nez de protection (8).
